# EUROPÄISCHE PATENTSCHRIFT

(11) **EP 0 705 494 B1**
(45) Veröffentlichungstag und Bekanntmachung des Hinweises auf die Patenterteilung: **03.03.1999**
(21) Anmeldenummer: 94918301.6
(22) Anmeldetag: 23.06.1994
(51) Int. Cl.: H02K 3/12

(54) **MEHRPHASIGE ELEKTRISCHE MASCHINE MIT EINER WICKLUNG AUS FLACHEN LEITERFORMTEILEN**
MULTIPHASE ELECTRIC MACHINE WITH A WINDING MADE OF FLAT SHAPED CONDUCTORS
MACHINE ELECTRIQUE A PHASES MULTIPLES AVEC UN ENROULEMENT CONSTITUE DE CONDUCTEURS FACONNES PLATS

(30) Priorität: 26.06.1993 DE 4321236
(43) Veröffentlichungstag der Anmeldung: 10.04.1996
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: DE9400724
(87) Internationale Veröffentlichungsnummer: WO9500997

(56) Entgegenhaltungen:
- WO-A-92/19036
- WO-A-93/03534
- DE-A- 2 731 295
- FR-A- 2 092 538
- GB-A- 1 329 205

## Beschreibung

Die Erfindung betrifft eine mehrphasige elektrische Maschine, sowie ein Verfahren zur Herstellung einer derartigen Maschine.

Eine gute Raumausnutzung in den Wickelköpfen schafft bei mehrphasigen elektrischen Maschinen über kurze Verbindungsstrecken und große Leiterquerschnitte günstige Voraussetzungen für eine Steigerung der Leistungsdichte und des Wirkungsgrades.

Durch Profil leiter, Nutstäbe und Formspulen gelingt es zwar im Nutraum eine hohe Raumausnutzung zu erreichen, in den Wickelköpfen wird der verfügbare Raum jedoch nur unzureichend zur Stromleitung ausgenutzt und die Verbindungswege sind aufgrund der zu berücksichtigenden Biegeradien insbesondere bei kleinen Schrittweiten relativ groß.

In der *JP-63-287338* wird eine eisenlose Glockenwicklung beschreiben, deren Leiterteile in einer Vorrichtung tangential geschichtet werden. Hierdurch wird das Verschränken aller Leiterteile einer Schicht in einem Arbeitsgang erleichtert, wobei die Verformung der Leiterenden in den beiden Wickelköpfen in unterschiedliche Richtung erfolgt. Zwei in unterschiedliche Richtungen verformte Schichten werden anschließend axial ineinandergesteckt und die zuvor verpreßten Leiterenden an den Stirnseiten miteinander verbunden. Das Verschränken ist nur bei kleinen Leiterquerschnitten ohne Beschädigung der Isolation möglich und das axiale Ineinanderschieben kann nur erfolgen, wenn keine weichmagnetischen Zähne zu berücksichtigen sind.

In der *DE-OS 41 11 626 A1* wird eine Stabwicklung beschrieben, in der durch den Einsatz scheibenförmiger Verbindungsleiter Biegeradien vermieden werden. Allerdings sind die Verbindungswege in den Wickelköpfen hierbei abhängig von der Nuttiefe, weshalb diese Bauform nur bei ringförmigen Radialluftspaltmaschinen mit geringer Nuttiefe vorteilhaft ist.

Aus der *GB 13 29 205* sind Leiterteile für Linearmaschinen bekannt die ohne Biegeradien hergestellt werden, indem die gesamte Leiterschicht in einer Form als Gußteil hergestellt wird. Ein vorgefertigtes Leiterteil überdeckt eine Vielzahl von Polteilungen, wobei alle Nutstäbe den gleichen Abstand zum Luftspalt aufweisen. Da die Leiterteile unabhängig voneinander hergestellt und dann ineinandergeschoben werden, sind teure Formen für eine Vorfertigung mit geringen Toleranzen erforderlich. Weiterhin vermindert sich die Leiterhöhe sprunghaft am Nutende, wodurch ein sehr kleiner kritischer Querschnitt erzeugt wird. In den Wickelköpfen liegen die Leiterteile aller Phasen flächig übereinander, wodurch dort große Hohlräume entstehen, die zur Kühlung beitragen sollen.

Weiterhin sind aus der *DE-OS 41 25 044 A1* Wicklungsschichten für einen Scheibenläufer bekannt, bei denen der Leiterquerschnitt im Wickelkopf axial verkleinert und tangential vergrößert wird. Alle Leiterstränge einer mehrphasigen Wicklungsschicht weisen eine eigene Bauform auf. Für jede Schicht wird somit eine der Phasenanzahl entsprechende Anzahl von Leiterbauformen benötigt, wobei der Herstellungsaufwand aufgrund der Größe und Komplexität der Leiterteile hoch ist. In Radialluftspaltmaschinen ist diese Bauform nicht einsetzbar.

Der Erfindung liegt daher die Aufgabe zugrunde, eine mehrphasige elektrische Maschine mit sich überlappenden Leitersträngen derart weiter zu bilden, daß mit möglichst geringem Herstellungsaufwand kurze Verbindungsstrecken und eine gute Raumausnutzung in den Wickelköpfen erreicht wird.

Diese Aufgabe wird erfindungsgemäß mit den Merkmalen der Ansprüche 1 und 9 gelöst. Durch den schrägen Verlauf der verbreiterten Enden der Leiterformteile wird die vorzugsweise eine Polteilung betragende Schrittweite von zwei miteinander verbundenen, biegeradienfrei vorgefertigten Leiterformteilen gemeinsam überbrückt. Leiterstränge unterschiedlicher Phasen werden in einer zum Luftspalt parallelen, verflochtenen Doppelschicht aneinander vorbeigeführt, ohne daß der Leiterquerschnitt gegenüber dem Querschnitt in den Nuten wesentlich verringert wird, indem aufeinanderfolgende Leiterformteile in unterschiedlichen Schichten dieser Doppelschicht angeordnet sind. Der Leiterverlauf wechselt somit bei jedem Wickelkopfdurchgang an den Verbindungsstellen seinen Abstand zur Luftspaltoberfläche des weichmagnetischen Körpers, wobei die Wechselrichtung innerhalb einer Doppelschicht alterniert. Eine Leiterquerschnittsreduzierung wird vermieden, indem direkt beim Übergang aus der Nut in den Wickelkopf eine Leiterquerschnittsvergrößerung in Richtung der Nutbreite erfolgt, die durch den anschließend schrägen Verlauf größtenteils wieder kompenziert wird. Auch an den Verbindungsstellen, die alle an den Wickelkopfstirnseiten liegen und somit jederzeit zugänglich sind, wird eine Leiterquerschnittsverengung für den Strom vermieden, indem die Leiterfomteile in den Endbereichen in Nutrichtung etwas verlängert sind. Damit die beim Zusammenfügen der verflochtenen Doppelschicht zu realisierenden Verbindungen große Aufschmelzzonen erhalten, werden die Leiterformteile vorzugsweise mit unsymmetrischen Enden vorgefertigt, und die schmalen Enden in einem separaten Fertigungsschritt vor dem Aufbringen der Isolationsschicht zu V-Teilen zusammengefügt und ggf. nachbearbeitet.

Die Anzahl der benötigten unterschiedlichen Leiterbauformen ist unabhängig von der Phasenanzahl. Für Maschinen mit ebenem Luftspalt sind nur drei unterschiedliche Leiterformteile notwendig, die aufgrund ihrer einfachen Gestalt und geringen Außenabmessungen einfach z.B. durch Stanzen oder Laserschneiden aus einem Leiterblech biegeradienfrei herstellbar sind.

Neben den sich ergänzenden Leiterformteilen wird lediglich noch eine Leiterbauform zum Wechseln der Schichten und eine Bauform als Stromzu- und -ableiter am Anfang und Ende eines Leiterstranges benötigt.

Die Leiterformteile können auch vorteilhaft in Radialluftspaltmaschinen eingesetzt werden, wobei allerdings für X Lagen (X + 2) unterschiedliche Leiterformteile vorzufertigen sind.

Der weichmagnetische Körper wird vorzugsweise in Segmente unterteilt und nachträglich in die vorgefertigte Wicklung in Richtung der Nuttiefe eingesteckt.

Weiter vorteilhafte Ausführungsformen sind den Unteransprüchen zu entnehmen.

Die **Zeichnungen** stellen vorteilhafte Ausführungsformen der Erfindung dar.
- Fig. 1: zeigt die dreidimensionale Ansicht eines Leiterformteils mit unsymmetrischen Enden für einen Linearmotor;
- Fig. 2: zeigt den Aufbau einer verflochten Doppelschicht für einen zweiphasigen Linearmotor;
- Fig. 3: zeigt einen Ausschnitt aus einem Leiterstrang einer Radialluftspaltmaschine beim Übergang zwischen zwei Doppelschichten;
- Fig. 4: zeigt einen Ausschnitt aus einem Leiterstrang einer Axialluftspaltmaschine mit Wechselleiterformteil;

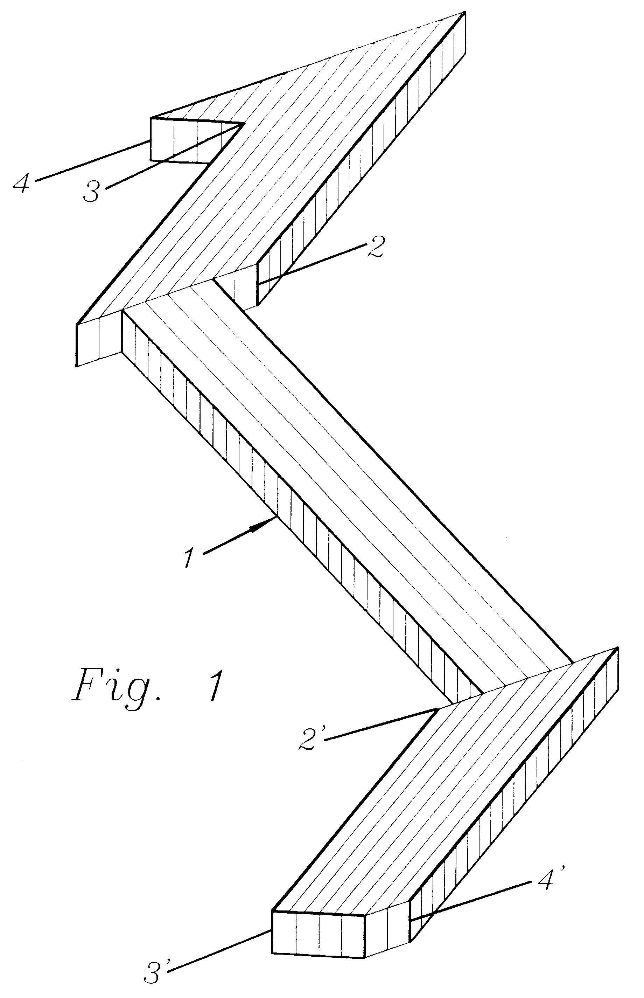

**Figur 1** zeigt eine Bauform eines erfindungsgemäßen Leiterformteiles **1** für einen Linearmotor, wobei der rechteckförmige Querschnitt des mittleren Teilbereichs von **2** bis **2'** die gesamte Nutbreite ausfüllt. Beide Enden **4** und **4'** reichen bis zur Stirnseite der Wickelköpfe, wobei die Teilbereiche in den Wickelköpfen (von **2** bis **3** bzw. von **2'** bis **3'**) gleichzeitig sowohl in Richtung der Nuten als auch in Richtung der Nutbreite verlaufen. Beim Nut-Wickelkopf-Übergang (bei **2** und **2'**) nimmt der Leiterquerschnitt in Richtung der Nutbreite beidseitig um jeweils eine halbe Zahnbreite zu. Durch den schrägen Verlauf verringert sich die effektive Leiterbreite für den Strom im Bereich **2** bis **3** und **2'** bis **3'** wieder auf etwa die Nutbreite. Zur Vergrößerung der Kontaktflächen bzw. des aufschmelzbaren Volumens an den Verbindungsstellen zum vorhergehenden oder nachfolgenden Leiterformteil, verlaufen die Teilbereiche an den Enden (von **3** bis **4** bzw. **3'** bis **4'**) wie der mittlere Teilbereich in Nutrichtung. Die gezeigte Bauform weist unsymmetrische Enden auf, wobei jeweils die zweite Verbindungsstelle (bei **4**) in einem Leiterstrang aus in Reihe geschalteten baugleichen Leiterformteilen **1** vergrößert wird, und die schmäleren Verbindungsstellen (bei **4'**) vor der Montage zusammengefügt werden.

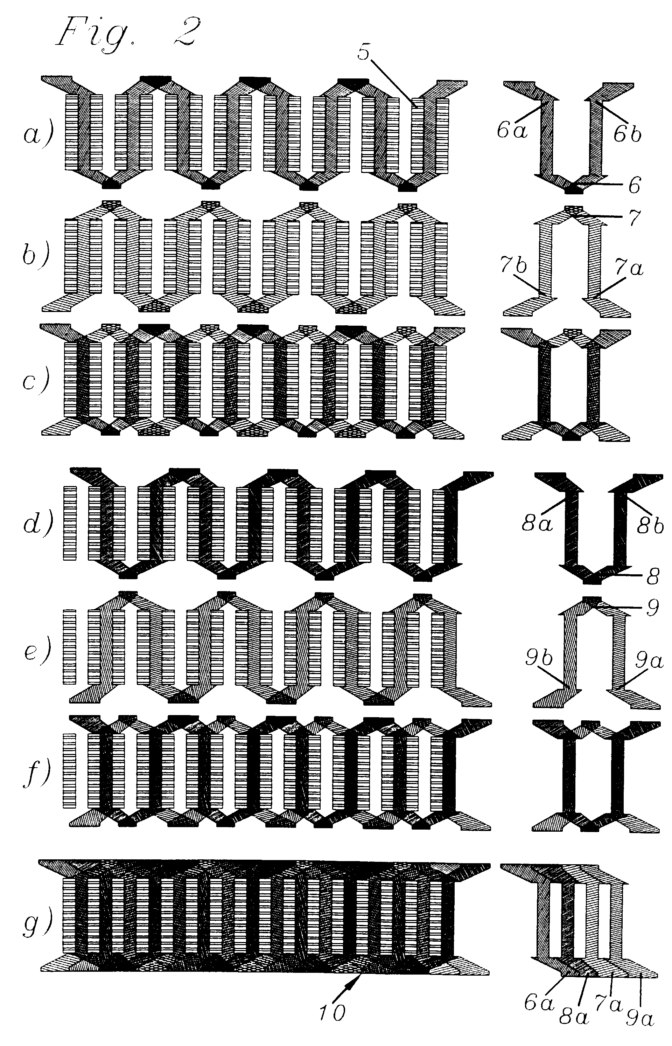

**Fig. 2** zeigt die Leiterverläufe in einer verflochtenen Doppelschicht eines zweiphasigen Linearmotors mit genutetem weichmagnetischem Körper **5**, von dem nur die Zähne sichtbar sind. Die Leiterteile weisen unsymmetrische Enden auf, wobei in der dargestellten Bauform in einen Wickelkopf in Bewegungsrichtung sich immer Schichtverbindungen von schmalen Enden und von breiten Enden abwechseln. Hierdurch können eine der Phasenanzahl entsprechende Anzahl von Leiterformteilen einer Schicht beim Zusammensetzen der verflochtenen Doppelschicht als Gruppe eingesetzt werden, wodurch sich die Montage der Wicklung vereinfacht. Eine zweiphasige Doppelschicht besteht aus vier Leitersträngen, die in **Fig. 2a, 2b, 2c** und **2d** einzeln dargestellt sind. Im betrachteten Ausschnitt besteht jeder dieser Leiterstränge aus baugleichen V-Teilen **6, 7, 8, 9** die wiederum aus jeweils zwei Leiterformteilen oder einstückig vorgefertigt werden. Leiterformteile **6a, 7a, 8a, 9a**, die der oberen Schicht angehören, sind von links unten nach rechts oben schraffiert und die Leiterformteile **6b, 7b, 8b, 9b** der unteren Schicht von links oben nach rechts unten. In **Fig. 2c** sind die beiden miteinander verflochtenen Leiterstränge der ersten Phase und in **Fig. 2f** die hierzu symmetrisch ergänzenden beiden Leiterstränge der zweiten Phase dargestellt. Die Leiterstränge bzw. die V-Teile einer Phase sind baugleich. Die V-Teile 6 bis 9 sind am rechten Bildrand einzeln bzw. sich ergänzend dargestellt. **Fig. 2g** zeigt, wie alle vier Leiterstränge zusammen eine verflochtene Doppelschicht **10** bilden, wobei die Doppelschicht in Richtung der Nuttiefe zwei ebene Oberflächen aufweist, deren Abstand an jeder Stelle der doppelten Leiterhöhe in den Nuten entspricht.

Derart kompakte Wicklungen sind durch Zusammenfügen von Leiterformteilen aufeinanderliegender Schichten für beliebige Phasenanzahlen und auch für Radial- und Axialluftspaltmaschinen einfach herstellbar.

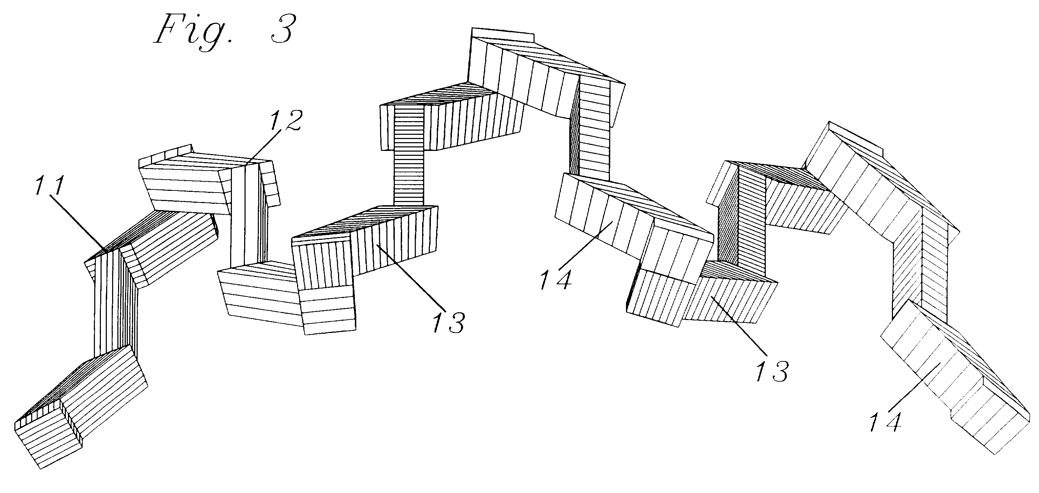

**Fig. 3** zeigt den Wechsel eines Leiterstranges zwischen zwei verflochtenen Doppelschichten aus einer Radialluftspaltmaschine. Hierbei sind links die beiden letzten Leiterformteile **11** und **12** der radial innen liegenden Doppelschicht dargestellt und rechts die vier ersten Leiterformteile **13** und **14** der radial nach außen folgenden Doppelschicht. Da in einer Radialluftspaltmaschine die Schrittweite mit dem Radius zunimmt, weist jede Schicht eine eigene Leiterbauform auf, was durch unterschiedliche Schraffuren verdeutlicht wird. Die tangentiale Stromrichtung wird beim Wechsel zwischen den Doppelschichten beibehalten. Jede Phase besteht somit aus zwei Leitersträngen von denen der dargestellte Leiterstrang rechtsdrehend nach außen und der ihn ergänzende Leiterstrang linksdrehend nach innen verläuft. Die beiden Leiterstränge können je nach gewünschtem Spannungs-Strom-Verhältnis in Reihe oder parallel geschaltet werden.

Insbesondere bei Niederspannungsmaschinen kann der Schichtwechsel zwischen zwei aufeinanderfolgenden V-Teilen auch stets in die gleiche Richtung erfolgen, wodurch keine verflochtenen Doppelschichten entstehen. Hierfür ist die gesamte Wicklung ineinander verflochten und es können viele Leiterstränge parallelgeschaltet werden. Da das Verschweißen bzw. Verlöten an den Stirnseiten nach dem Zusammensetzen der gesamten Wicklung erfolgt, verändern unterschiedliche Verschaltungsvarianten den Herstellungsaufwand nur gering.

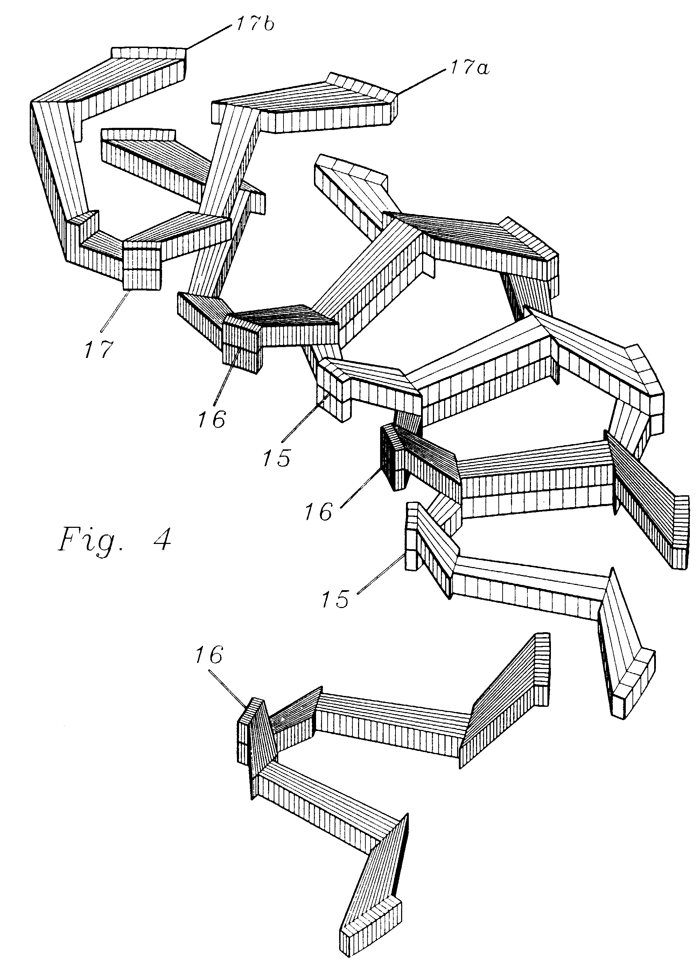

Der Doppelschichtwechsel mit gleichbleibender Umlaufrichtung ist nur in rotierenden Maschinen möglich, in denen die Doppelschichten jeweils den gesamten Umfang einnehmen. In Linearmotoren und in sektoriell aufgeteilten Maschinen erfolgt der Doppelschichtwechsel mit sich in Richtung der Nutbreite umkehrenden Stromfluß in speziellen Wechselleiterformteilen. **Fig. 4** zeigt einen Leiterstrang einer in Sektoren aufgeteilten Axialluftspaltmaschine, wobei das Wechselleiterformteil **17** innerhalb einer Doppelschicht die beiden Leitertränge einer Phase miteinander verbindet. Die beiden Leiterstränge des in einem Umfangsauschnitt dargestellten Phasenstranges bestehen aus baugleichen V-Teilen **15** und **16**, die wiederum aus baugleichen Leiterformteilen vorgefertigt werden. Das Wechselleiterformteil **17** besteht zur Hälfte ebenfalls aus einem dieser Leiterformteile **17a**, während die zweite Hälfte **17b** Enden in unterschiedlichen Schichten und mit gleicher Tangentialkomponente aufweist. Die Leiterhöhe im mittleren Teilstück ist gegenüber den übrigen Leiterformteilen verdoppelt, wobei die Leiterbreite je nach Ausgestaltung der Randnut unterschiedlich ausgeführt werden kann. Ein Wechselleiterformteil zwischen zwei Doppelschichten weist lediglich an einem Ende außenliegende anstatt innenliegende Kontaktflächen auf.

## Patentansprüche

1. Mehrphasige elektrische Maschine mit mindestens einer Wicklung, deren Leiterstränge in zum Luftspalt parallelen Schichten (10) verlaufen und aus ohne Biegeradien hergestellten Leiterteilen (1, 11 bis 14) zusammengefügt werden, die teilweise in Nuten eines weichmagnetischen Körpers (5) angeordnet sind und in den Wickelköpfen gleichzeitig in Richtung der Nuten und in Richtung der Nutbreite verlaufen, wobei jeder Leiterstrang bei jedem Wickelkopfdurchgang die Schicht wechselt und die Verbindung von zwei aufeinanderfolgenden Leiterteilen beim Wechseln der Schicht erfolgt.

2. Mehrphasige elektrische Maschine nach Anspruch 1,
**dadurch gekennzeichnet,** daß die Leiterformteile (1, 11 bis 14) zwei zur Luftspaltoberfläche des weichmagnetischen Körpers parallele Oberflächen aufweisen.

3. Mehrphasige elektrische Maschine nach Anspruch 1,
**dadurch gekennzeichnet,** daß der Leiterquerschnitt eines Leiterformteiles (1) beim Nut-Wickelkopf-Übergang (2 bzw. 2') jeweils in Richtung der Nutbreite vergrößert ist.

4. Mehrphasige elektrische Maschine nach Anspruch 1,
**dadurch gekennzeichnet,** daß die Leiterformteile (1) an beiden Enden (4 bzw. 4') in Richtung der Nutbreite unterschiedliche Abmessungen aufweisen.

5. Mehrphasige elektrische Maschine nach Anspruch 1,
**dadurch gekennzeichnet,** daß zwei aufeinanderfolgende Leiterformteile (6a, 6b bzw. 7a, 7b) vorgefertigte V-Teile (6 bzw. 7) bilden.

6. Mehrphasige elektrische Maschine nach Anspruch 1,
**dadurch gekennzeichnet,** daß jeweils zwei Leiterstränge von jeder Phase in aufeinanderfolgenden Nuten abwechselnd über- und untereinander verlaufen.

7. Mehrphasige elektrische Maschine nach Anspruch 6,
**dadurch gekennzeichnet,** daß die miteinander verflochtenen Leiterstränge aller Phasen zusammen eine mehrphasige verflochtene Doppelschicht (10) bilden, deren Abmessungen in Richtung der Nuttiefe der doppelten Leiterhöhe der eingesetzten Leiterformteile in den Nuten entspricht.

8. Mehrphasige elektrische Maschine nach Anspruch 7,
**dadurch gekennzeichnet,** daß in Linearmaschinen und in Sektoren aufgeteilte Maschinen an den Enden einer Doppelschicht (10) Wechselleiterformteile (17) eingebaut sind, deren Enden (17a, 17b) in Richtung der Nutbreite auf die gleiche Seite verlaufen.

9. Verfahren zur Herstellung einer mehrphasigen elektrischen Maschine mit mindestens einer Wicklung, die teilweise in Nuten eines weichmagnetischen Körpers angeordnet ist und deren Leiterstränge aus Leiterformteilen zusammengefügt werden, die durch Schneiden aus einem Leiterblech hergestellt und in der geschnittenen Form an den Stirnseiten des Wickelkopfes zusammengefügt werden.

10. Verfahren zur Herstellung einer mehrphasigen elektrischen Maschine nach Anspruch 9, **dadurch gekennzeichnet,** daß die jeweils schmaleren Enden von Leiterformteilen mit unsymmetrischen Enden in einem separaten Fertigungsschritt vor dem Aufbringen der Isolierschicht zusammengefügt werden.

## Claims

1. A multiphase electric machine with at least one winding whose conductor lanes are running in parallel layers (10) towards the air gap and which are assembled from conductor parts without (1), (11) to (14) bending radii, said conductor lanes being partially arranged in the grooves of a soft magnetic body (5) and running in the winding overhangs simultaneously in the direction of the groove length and the groove width, and where in said winding each conductor lane changes the layer with each pass through the winding overhang and connection of two successive conductor parts is made when changing the layer.

2. A multiphase electric machine as recited in claim 1 wherein the structural conductor parts (1), (11) to (14) possess two parallel surfaces which lie parallel to the air gap surface of the soft magnetic body.

3. A multiphase electric machine as recited in claim 1 wherein the conductor cross section of a structural conductor part (1) is enlarged in direction to the groove width at the passage from the groove to the winding overhang (2) or, respectively (2').

4. A multiphase electric machine as recited in claim 4 wherein the structural conductor parts (1) possess on both ends (4), (4') different dimensions in direction to the groove lengths.

5. A multiphase electric machine as recited in claim 1 wherein two successive structural conductor parts (6a, 6b) or, respectively (7a,7b) form prefabricated V-parts (6), (7).

6. A multiphase electric machine as recited in claim 1 wherein two conductor lanes each of each phase are running alternately above and below each other in successive grooves.

7. A multiphase electric machine as recited in claim 10 wherein all interlaced conductor lanes of all phases together form one multiphase interlaced double layer (10), the measurements of said double layer in direction to the groove depth corresponding to twice the height of the conductor of the structural conductor parts inserted into the grooves.

8. A multiphase electric machine as recited in claim 11 wherein in linear machines and in machines consisting of sectors alternating structural conductor parts (17) are built into the ends of a double layer (10), the ends of said alternating structural conductor parts (17a), (17b) are running in the direction of the groove width on the same side.

9. A process for the production of a multiphase electric machine with at least one winding which is partially arranged in the grooves of a soft magnetic body and whose conductor lanes are assembled from structural conductor parts which have been produced by cutting from sheet metal and which are joined in this cut shape at the face sides of the winding overhang.

10. A process for the production of a multiphase electric machine as recited in claim 14 wherein the narrower ends of structural conductor parts with asymmetrical ends are joined in a separate work step prior to the application of the insulating-parts are inserted into each other outside the soft magnetic body in the direction of the groove depth and the groove length and wherein said V-parts are subsequently slightly rotated around their central axis which run in direction of the groove length.

## Revendications

1. Machine électrique polyphasée avec au moins un bobinage, dont les cordes conductrices sont postionnées dans des couches (10) qui sont parallèlles à l'entrefer, et qui sont assemblées des élements du conducteur (1, 11-14) fabriqués sans un rayon du pli, et qui sont positionnées partiellement dans les rainures d'un corps magnétique doux (5), et qui sont positionnées - dans les têtes de bobines - dans la direction des rainures et en même temps, dans la direction de la largeur de la rainure, et chaque corde conductrice change d'une couche à l'autre toujours au passage de la tête de bobine et, le jonction de deux éléments du conducteur en suite a lieu au changement des couches.

2. Machine électrique polyphasée selon la revendication no. 1, dont il est caractéristique que les pièces moulées du conducteur (1, et 11-14) ont deux surfaces parallèles à la surface de l'entrefer du corps magnétique doux.

3. Machine électrique polyphasée selon la revendicaition no.1, dont il est caractéristique que la section du conducteur d'une pièce moulée du conducteur (1) est augmentée dans la direction de la largeur de la rainure au passage de la rainure à la tête de bobine (2, 2').

4. Machine électrique polyphasée selon la revendication no. 1, dont il est caractéristique que les pièces moulées du conducteur (1) ont des différentes dimensions aux deux extrémités (4,4') dans la direction de la largeur de la rainure.

5. Machine électrique polyphasée selon la revendication no.1, dont il est caractéristique que deux pièces moulées en suite (6a,6b et 7a,7b) forment des pièces en V préfabriquées (6,7).

6. Machine électrique polyphasée selon la revendication no. 1, dont il est caractéristique que toujours deux cordes conductrices de chaque phase vont alternamment au-dessus et au-dessous de l'un et de l'autre dans des rainures en suite.

7. Machine électrique polyphasée selon la revendication no.6, dont il est caractéristique que les cordes conductrices enlacées de toutes les phases forment une couche double polyphasée et enlacée (10), dont les dimensions dans la direction de la profondeur de la rainure sont aussi grandes que la double hauteur du conducteur des pièces moulées du conducteur inserées dans les rainures.

8. Machine électrique polyphasée selon la revendication no. 7, dont il est caractéristique que, dans les machines linéaires et dans les machines partagées en secteurs, aux extrémités d'une couche double (10), des pièces moulées du conducteur alternant (17) sont installées dont les extrémités (17a,17b) vont au même côté dans la direction de la largeur de la rainure.

9. Procédure pour la fabrication d'une machine électrique polyphasée avec au moins un bobinage, qui est partiellement arrangé dans les rainures d'un corps magnétique doux et dont les cordes conductrices sont assemblées des pièces moulées du conducteur qui sont fabriquées en être coupées d'une lame du conducteur et qui sont assemblées, en cette forme de coupe, aux fronts des têtes de bobine.

10. Procédure pour la fabrication d'une machine électrique polyphasée selon la revendication no.9, dont il est caractéristique que les extrémités plus étroites des pièces moulées du conducteur ayant des extrémités dissymétriques, sont assemblées dans une phase de fabrication séparate avant qu'on applique la couche d'isolation.
